# EUROPÄISCHE PATENTSCHRIFT

(11) **EP 0 840 042 B1**
(45) Veröffentlichungstag und Bekanntmachung des Hinweises auf die Patenterteilung: **27.11.2002**
(21) Anmeldenummer: 97117549.2
(22) Anmeldetag: 10.10.1997
(51) Int. Cl.: F16J 15/32

(54) **Bürstendichtung für Rotor-Stator-Anordnung**
Brush seal for rotor/stator device
Joint à brosses pour dispositif rotor/stator.

(30) Priorität: 02.11.1996 DE 19645163
(43) Veröffentlichungstag der Anmeldung: 06.05.1998
(73) Patentinhaber: MTU Aero Engines GmbH, 80995 München (DE)
(72) Erfinder: Schulze, Gisbert, Dr., 85221 Dachau (DE); Wöhrl, Bernhard, Dr., 82131 Gauting (DE)
(74) Vertreter: Einsele, Rolf W.

(56) Entgegenhaltungen:
- EP-A- 0 534 686
- DE-A- 3 907 614
- US-A- 4 781 388
- US-A- 5 474 306

## Beschreibung

Die Erfindung betrifft eine Einrichtung zur Abdichtung eines Umfangsspaltes zwischen unterschiedlich druckbeaufschlagten Räumen einer Rotor-Stator-Anordnung mit einer am Stator drehfest angebrachten Bürstendichtung, deren zum Spalt hin ausgerichteten Borsten die Rotorachse konzentrisch umgeben. Eine solche Einrichtung ist in der DE-OS 39 07 614 offenbart.

Bürstendichtungen kommen vorwiegend bei Turbomaschinen, insbesondere Gasturbinentriebwerken zum Einsatz, um fluidisch unterschiedlich druckbeaufschlagte Räume an Umfangsspalten, z.B. zwischen einem Maschinengehäuse und dem Rotor oder einer Maschinenwelle mit möglichst geringer Leckage abzudichten. Dabei sollen beispielsweise aus Rotorunwuchten resultierende, exzentrische Rotor- oder Wellenpositionen gegenüber dem Gehäuse durch eine elastische und bewegliche Borstennachführung ausgeglichen werden. Hierin heben sich Bürstendichtungen gegenüber den bislang verwendeten Labyrinthdichtungen vorteilhaft ab, da diese sich nur in sehr eingeschränktem Maße an Wellenbewegungen anpassen können. Desweiteren unterscheiden sich Bürstendichtungen von den Labyrinthdichtungen durch ihre Unempfindlichkeit gegenüber Verunreinigungen im abzudichtenden Medium, durch niedrigere Herstellkosten und geringeres Gewicht.

Bei Einbauräumen zwischen Rotor und Stator mit sehr geringer radialer Erstreckung ist die Verwendung der bisher bekannten Bürstendichtungen mit radial ausgerichteten Borsten aufgrund deren radialen Bauhöhe problematisch. Erschwerend kommt hierbei hinzu, daß mit kürzerer Borstenlänge die Nachgiebigkeit der Bürstendichtung verloren geht. Zur Einsparung radialer Bauhöhe wird in der DE-OS 38 28 833 eine zum Rotor koaxiale Anordnung biegeelastischer Stäbe vorgeschlagen, die mit ihrem einen Ende am Stator festgelegt sind und an deren gegenüberliegenden Ende ein zum Rotor koaxialer Dichtring angebracht ist. Dieser Dichtring bildet mit der Rotorumfangsfläche einen Dichtspalt als Primärdichtung aus. Nachteilig bei dieser Lösung ist der Aufwand, welcher für die Befestigung der Enden der Stäbe im Stator bzw. im Dichtring erforderlich ist.

Hiervon ausgehend ist es Aufgabe der Erfindung, eine gattungsgemäße Einrichtung zur Abdichtung eines Umfangsspaltes anzugeben, die sich durch ein geringes radiales Einbaumaß und durch geringen Bauaufwand auszeichnet.

Erfindungsgemäß wird die Aufgabe dadurch gelöst, daß die freien Borstenenden der im wesentlichen achsparallel ausgerichteten Borsten in einen am Rotor ausgebildeten, achskonzentrischen Umfangsschlitz ragen.

Die Erfindung hat den Vorteil, daß durch die achsparallele Ausrichtung der Borsten sich für die Bürstendichtung eine sehr niedrige radiale Bauhöhe ergibt, so daß auch bei beengten Einbauverhältnissen zwischen Rotor- und Stator Bürstendichtungen mit ihren spezifischen Vorteilen verwendbar sind. Aufgrund des Einschlusses der Borstenenden im achskonzentrisch ausgebildeten Umfangsschlitz des Rotors, ist eine hohe Dichtigkeit auch bei radialer Relativbewegung zwischen Stator und Rotor gewährleistet, da zum einen die Borsten durch ihre axiale Ausrichtung sich in radialer Richtung biegeelastisch verhalten und zum anderen durch den Einschluß der Borstenendenenden im Umfangsschlitz die wirksame Spaltweite von Radialbewegungen der Bürstendichtung unabhängig ist. Diese wird vielmehr konstruktiv durch die Weite des Umfangsschlitzes, also durch den Abstand der gegenüberliegenden Wandungen des Umfangschlitzes festgelegt. Desweiteren ist je nach Ausführung der Spaltlänge und der freien Borstenlänge eine großzügige zulässige Axialdehnung bzw. -relativbewegung der gegeneinander abzudichtenden Teile möglich.

Die hohe Sperrwirkung der Einrichtung resultiert auf der während des Betriebes im Umfangsschlitz sich ausbildenden Grenzschicht des strömenden Fluides. Die Grenzschicht bildet sich dabei zweifach: zwischen der radial innen liegenden Wandung des Umfangsschlitzes und den Borsten einerseits und der radial außenliegenden Wandung und den Borsten andererseits. Dabei kommt es aufgrund der kinetischen Energie und der kinematischen Zähigkeit des Fluides zu einer Abdrückwirkung, d.h. zum Aufschwimmen der Borsten so daß die Bürstendichtung selbst im leicht gebogenen Zustand der Borsten berührungsfrei abdichtet. Unterstützt wird die Dichtwirkung durch einen Drosseleffekt ähnlich einer Labyrinthströmung, wobei der Leckagestrom zweimal senkrecht zur rotierenden Grenzschicht zwischen den rotierenden Wandungen des Umfangsschlitzes und den Borsten hindurchtreten muß. Der Dichteffekt resultiert dann aus der starken Verwirbelung und aus der Energiedissipation der Leckageströmung. Für den möglichst berührungsfreien Lauf der Borsten innerhalb des Umfangsschlitzes und der daraus resultierenden optimalen Dichtwirkung ist die Einrichtung vorzugsweise derart ausgelegt, daß bei Stillstand des Rotors die Borsten der radial außen liegenden Wandung des Umfangsschlitzes näher stehen als der radial innenliegenden Wandung bzw. die radial außen liegende Wandung berühren, so daß unter dem Einfluß der Fliehkraft und der Temperaturdehnung des Rotors dieser bezüglich der Bürstendichtung nach radial außen wandert und somit die Borsten etwa mittig in den Umfangsschlitz hineinragen. Dieser zentrierende Effekt wind unterstützt durch die von den Grenzschichten bestimmten Druckverhältnisse beidseits der Borsten.

Weitere vorteilhafte Ausführungsformen der Erfindung ergeben sich aus den Merkmalen der Patentansprüche 2 bis 13.

Aufgrund des abschnittsweise konischen Verlaufs des Umfangsschlitzes mit Aufweitung zur Öffnung hin, ist eine Ausbiegung der Borsten tolerabel, so daß im Betrieb die Bürstendichtung weitgehend berührungsfrei im Umfangsschlitz läuft und somit der Verschleiß reduziert wird.

In einer bevorzugten Weiterbildung der Erfindung geht der öffnungsseitig konische Verlauf des Umfangsschlitzes in einen zylindrischen Abschnitt über, in welchem die Borsten hineinragen und enden. Hierdurch wird ein für die Dichtwirkung günstiger, symmetrischer Verlauf der beidseitigen Gtenzschichten gewährleistet.

In weiterer Ausbildung der Erfindung gemäß den Merkmalen der Ansprüche 8 und 9 läßt sich auf die Ausbildung der Grenzschicht beiderseits der Borsten im Sinne einer optimalen Dichtwirkung Einfluß nehmen in dem die radial innere oder äußere Wandung oder beide Wandungen einen konischen Verlaufaufweisen.

Hilfreich für die Montage der Einrichtung erweist sich eine Ausrundung der Umfangsränder am Umfangsschlitz, so daß Beschädigungen an der Bürstendichtung während Reparatur- und Inspektionsarbeiten vorgebeugt werden.

Durch die Ausbildung eines ringförmigen Umfangsbundes auf einer oder beiden Seiten der Borsten wird zum einen einer Verwirbelung der Borsten beim Auftreffen des abzudichtenden Fluides und zum anderen eine Umlenkung des Fluides in den Umfangsschlitz bewirkt, was wiederum einer hohen Dichtigkeit entgegenkommt. Von Vorteil für diesen Effekt ist dabei, wenn die Umfangsbunde zumindest während des Betriebes in den Umfangsschlitz hineinragen. Dementsprechend weist der Umfangsschlitz im Öffnungsbereich eine entsprechende Weite auf.

Eine bevorzugte Ausführungsform der Erfindung wird nachfolgend unter Bezugnahme auf die beigefügte Zeichnung erläutert. Es zeigt:
- Fig. 1: einen Längsschnitt durch eine Rotor-Stator-Anordnung mit einer Bürstendichtung während des Betriebes,
- Fig. 1b: einen Längsschnit der Rotor-Stator-Anordnung nach Fig. 1a bei Stillstand des Rotors und
- Fig. 2: einen perspektivischen Ausschnitt der Rotor-Stator-Anordnung nach Fig. 1a mit Darstellung der Grenzschichten im Umfangsschlitz.

Die in Fig. I a und 1b dargestellte Rotor-Stator-Anordnung 1,2 ist Bestandteil einer nicht weiter dargestellten Strömungsmaschine. Eine zwischen Rotor 1 und Stator 2 angeordnete Bürstendichtung 3 dient zur Abdichtung zweier unterschiedlich druckbeaufschlagter Räume R₁ und R₂. Dem hülsenförmigen Abschnitt des um die Achse A drehenden Rotors 1 liegt axial beabstandet ein Dichtungsträger 4 gegenüber, der am Stators 2 befestigt (Nieten) ist. Die ringförmige, konzentrisch zum Rotor I angeordnete Bürstendichtung 3 weist ein Borstenbündel auf, dessen Borsten 5 axial ausgerichtet und im Dichtungsgehäuse 6 festgelegt sind.

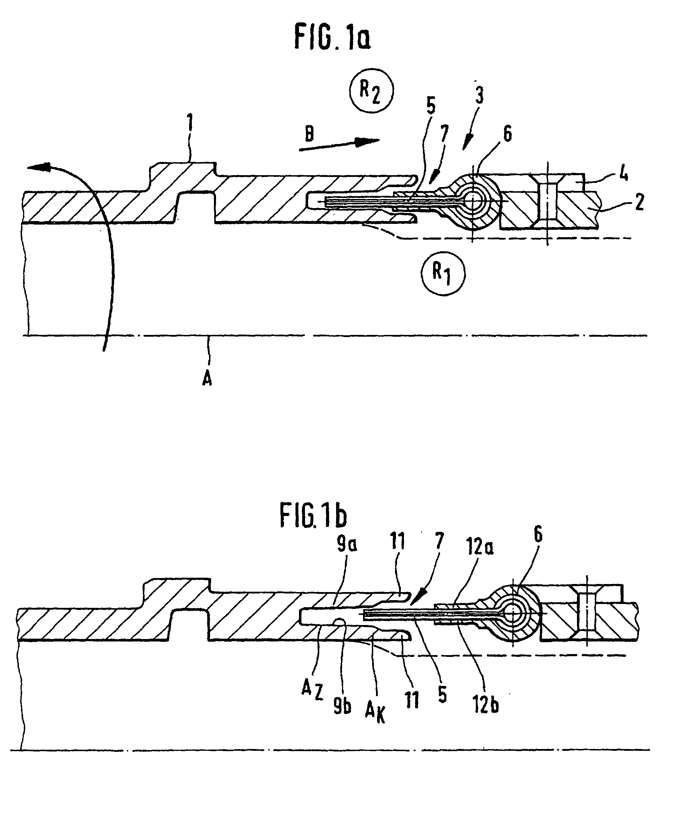

Die aus dem Dichtungsgehäuse 6 hervortretenden Borsten 5 ragen mit ihren freien Enden in einen am Rotor 1 ausgebildeten, achskonzentrischen Umfangsschlitz 7. Unter Berücksichtigung von Relativbewegungen zwischen Rotor 1 und Stator 2 ist der Umfangsschlitz 7 etwa auf gleicher radialer Höhe wie die Bürstendichtung 3 ausgebildet, so daß die Borsten 5 bei Rotorstillstand - wie in Fig. 1b gezeigt - innerhalb des Umfangsschlitzes 7 enden. Die Borsten 5 enden dabei innerhalb eines konisch ausgebildeten Abschnittes A_{κ} des Umfangsschlitzes 7, welcher sich durch den zur Öffnung 8 des Umfangsschlitzes 7 sich erweiternden Verlauf der radial inneren und radial äußeren Wandung 9a,b des Umfangsschlitzes 7 ergibt. Der konusförmige Abschnitt A_{κ} ist dabei derart ausgebildet, daß die Borsten 5 bei Rotorstillstand die äußere, konisch verlaufende Wandung 9a berührt oder einen geringen Abstand einhalten, also berührungsfrei angeordnet sind. Mit zunehmender Drehzahl des Rotors 1 und mit einhergehendem Temperaturanstieg führt der Rotor 1 sowohl eine axiale, zum Stator 2 gerichtete als auch eine radial nach außen gehende Bewegung aus, wie dies durch den Bewegungspfeil B dargestellt ist. Im Vergleich zur Position der Borsten 5 bei Rotorstillstand - wie in Fig. 1b gezeigtragen die Borsten 5 während des Betriebes weiter in den Umfangsschlitz 7 hinein, wobei die radial innere Wandung 9b sich den Borsten aufgrund der Fliehkraftwirkung und der Temperaturdehnung nähert oder gar zeitweise berührt. Die Borsten 5 befinden sich dann in einem zylindrischen Abschnitt Az mit nur geringem Abstand zum Grund 10 des Umfangsschlitzes 7.

Eine sich aufgrund der Einbauverhältnisse oder Betriebsbedingungen ergebenede radial versetzte oder schräg stehende Position des Stators 2 gegenüber dem Rotor 1 wird durch die biegeelastischen Borsten 5 ausgeglichen. Dabei kommt der zur Öffnung 8 hin ausweitende Verlauf des Umfangsschlitzes 7 sowie die ausgerundeten Umfangsränder 11 des Umfangsschlitzes 7 zu gute, um einen Verschließ der Borsten 5 im Randbereich des Umfangschlitzes 7 zu vermeiden.

Das Dichtungsgehäuse 6, welches die Borsten 5 einfaßt, weist zwei in axialer Richtung sich erstreckende, zueinander konzentrische Umfangsbunde 12a,b auf, die zwischen sich die Borsten 5 fassen. Die axiale Länge der beiden Umfangsbunde 12a,b ist derart abgestimmt, daß diese zumindest während des Betriebes bis etwa zum konischen Abschnitt Ak des Umfangsschlitzes 7 in diesen hineinragen.

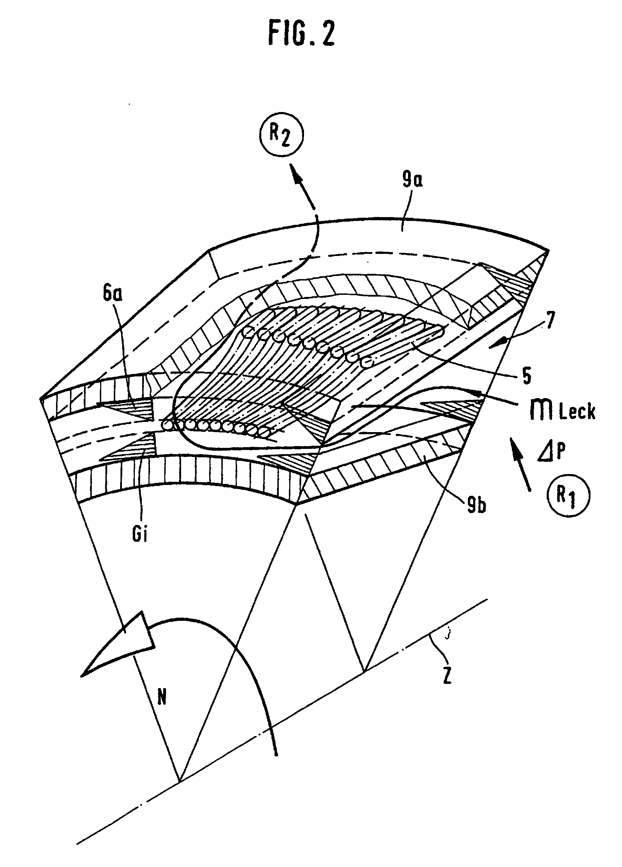

Fig. 2 zeigt einen Ausschnitt der Rotor-Stator-Anordnung während des Betriebes, wobei der Einfluß der sich an den Wänden 9a,b ausbildenden Grenzschicht G auf die Borsten 5 dargestellt ist. Währen des Betriebes bildet sich jeweils zwischen der inneren und äußeren Wandung 9a,b sowie den Borsten 5 eine innere und äußere Grenzschicht G_{i,a} aus, die mit dem Rotor 1 mitdreht. Hierdurch kommt es aufgrund der kinetischen Energie und der kinematischen Zähigkeit der abzudichtenden Strömung m zum Aufschwimmen der Borsten 5, so daß die Bürstendichtung 3 auch bei leicht gekrümmten Borsten 5 berührungsfrei abdichtet. Hinzu kommt ein Drosseleffekt ähnlich einer Labyrinthdichtung, wobei der Leckagestrom m innerhalb des Umfangsschlitzes 7 zweimal zwischen den Wänden 9a,b und den Borsten 5 umgelenkt wird, was zu einer starken Verwirbelung und Energiedisipation der Leckageströmung führt und schließlich zur Erhöhung der Dichtwirkung beiträgt.

## Patentansprüche

1. Einrichtung zur Abdichtung eines Umfangsspaltes (5) zwischen von einem Fluid unterschiedlich druckbeaufschlagten Räumen (R₁, R₂) einer Rotor-Stator-Anordnung (1, 2) mit einer am Stator (2) drehfest angebrachten Bürstendichtung (3), deren zum Spalt (5) hin ausgerichteten Borsten (5) die Rotorachse (Z) konzentrisch umgeben, dadurch gekenzeichnet, daß die freien Borstenenden der im wesentlichen achsparallel ausgerichtete Borsten (5) in einen am Rotor (1) ausgebildeten, achskonzentrischen Umfangsschlitz (7) ragen und einseitig an der inneren Umfangsfläche (9b) des Umfangsschlitzes (7) anliegen und daß die Andrückkraft und die Federkennung der Borsten (5) so auf die physikalischen Eigenschaften des Fluids abgestimmt sind, daß bei erhöhter Drehzahl die Borsten (5) bezüglich der Umfangsfläche (9b) aufschwimmen und berührungsfrei bleiben.

2. Einrichtung nach einem der vorhergehenden Ansprüche, **dadurch gekennzeichnet, daß** die Borsten (5) derart biegeelastisch ausgeführt sind, daß die Borsten (5) im Betrieb aufschwimmen und im wesentlichen ggü den Wandungen (9a, 9b) des Umfangsschlitzes (7) berührungsfrei bleiben.

3. Einrichtung nach Anspruch 1 oder 2, **dadurch gekennzeichnet, daß** der zur Bürstendichtung (3) sich öffnende Umfangsschlitz (7) sich zur Öffnung (8) hin zumindest abschnittsweise aufweitet.

4. Einrichtung nach einem der vorhergehenden Ansprüche, **dadurch gekennzeichnet, daß** die Borsten (5) in einem zylindrischen Abschnitt (A_{z}) des Umfangsschlitzes (7) enden.

5. Einrichtung nach Anspruch 4, **dadurch gekennzeichnet, daß** der zylindrische Abschnitt (A_{z}) von der Öffnung (8) beabstandet, dem Grund (10) des Umfangsschlitzes (7) benachbart ausgeführt ist.

6. Einrichtung nach einem der Ansprüche 3 bis 5, **dadurch gekennzeichnet, daß** an die Öffnung (8) ein Abschnitt mit im wesentlichen gleichbleibender Weite angrenzt.

7. Einrichtung nach einem der vorhergehenden Ansprüche, **dadurch gekennzeichnet, daß** der Umfangsschlitz (7) zwischen zwei zylindrischen Abschnitten (A_{z}) einen Abschnitt (A_{κ}) mit konischem Verlauf aufweist.

8. Einrichtung nach einem der vorhergehenden Ansprüche, **dadurch gekennzeichnet, daß** der Umfangsschlitz (7) durch zueinander konzentrische Wandungen (9a, 9b) nach radial innen und außen begrenzt wird.

9. Einrichtung nach Anspruch 8, **dadurch gekennzeichnet, daß** die radial innere und/oder die radial äußere Wandung (9a bzw 9b) einen konischen Verlauf aufweist.

10. Einrichtung nach einem der vorhergehenden Ansprüche, **dadurch gekennzeichnet, daß** die die Öffnung (8) bildenden Umfangsränder (11) des Umfangsschlitzes (7) nach außen erweiternd abgerundet sind.

11. Einrichtung nach einem der vorhergehenden Ansprüche, **dadurch gekennzeichnet, daß** die Bürstendichtung (3) ein am Stator (1) angebrachtes Dichtungsgehäuse (6) aufweist, welches zur Führung der Borsten (5) in einem radial inneren und/oder äußeren Umfangsbund (12a,b) ausläuft.

12. Einrichtung nach Anspruch 11, **dadurch gekennzeichnet, daß** der bzw. die Umfangsbunde (12a,b) zumindest während des Betriebes in den Umfangsschlitz (7) ragen.

13. Einrichtung nach einem der vorhergehenden Ansprüche, **dadurch gekennzeichnet, daß** die Bürstendichtung (3) lösbar mit dem Stator (1) verbunden ist.

## Claims

1. Device for sealing a circumferential gap (5) between two spaces (R₁, R₂) of a rotor-stator arrangement (1, 2) which are under different fluidic pressures, having a brush seal (3) rotationally fixed on the stator (2) whose bristles (5) are directed towards the gap (5) and surround the rotor axis (Z) concentrically,
**characterised in that**
the free ends of the essentially axis-parallel bristles (5) project into an axially concentric circumferential slot 7 formed in the rotor (1) and are on one side in contact with the inner circumferential surface (9b) of the circumferential slot (7), and the contact force and elastic characteristics of the bristles (5) are matched to the physical properties of the fluid in such manner that at high rotation speed the bristles (5) are deflected away from the circumferential surface (9b) and remain out of contact.

2. Device according to any of the preceding claims,
**characterised in that**
the bristles (5) are made with a bend elasticity such that the bristles (5) are deflected during operation and remain essentially out of contact with the walls (9a, 9b) of the circumferential slot (7).

3. Device according to Claims 1 or 2,
**characterised in that**
the circumferential slot (7) opening towards the brush seal (3) widens towards its open end (8), at least along part thereof.

4. Device according to any of the preceding claims,
**characterised in that**
the bristles (5) end in a cylindrical section (A_{z}) of the circumferential slot (7).

5. Device according to Claim 4,
**characterised in that**
the cylindrical section (A_{z}) is a distance away from the open end (8) and is formed adjacent to the bottom (10) of the circumferential slot (7).

6. Device according to any of Claims 3 to 5,
**characterised in that**
adjacent to the open end (8) there is a section with essentially constant width.

7. Device according to any of the preceding claims
**characterised in that**
between two cylindrical sections (A_{Z}), the circumferential slot (7) has a section (A_{K}) of conical shape.

8. Device according to any of the preceding claims,
**characterised in that**
the circumferential slot (7) is delimited by walls (9a, 9b) concentric with one another radially on the inside and outside.

9. Device according to Claim 8,
**characterised in that**
the radially inner and/or the radially outer wall (9a or 9b respectively) comprise(s) a conical shape.

10. Device according to any of the preceding claims,
**characterised in that**
the circumferential edges (11) of the circumferential slot (7) that form its open end (8) are rounded off outwards, making a widened aperture.

11. Device according to any of the preceding claims,
**characterised in that**
the brush seal (3) comprises a seal housing (6) attached to the stator (1), which extends to form (a) radially inner and/or outer circumferential band(s) (12a, b) in order to guide the bristles (5).

12. Device according to Claim 11,
**characterised in that**
the circumferential band(s) project(s) into the circumferential slot (7), at least during operation.

13. Device according to any of the preceding claims,
**characterised in that**
the brush seal (3) is attached to the stator (1) in a detachable way.

## Revendications

1. Dispositif d'étanchéité d'un intervalle périphérique (5) entre des espaces (R₁, R₂) sollicités de façon différente par un fluide, d'un ensemble (1, 2) à rotor et à stator comprenant un joint à brosses (3) monté fixement en rotation sur le stator (2), joint à brosses dont les brosses (5) orientées en direction de l'intervalle (5) entourent concentriquement l'axe (Z) du rotor, **caractérisé en ce que** les extrémités libres des brosses (5), orientées pratiquement de manière parallèle à l'axe, pénètrent dans une fente périphérique (7) concentrique par rapport à l'axe et formée sur le rotor (1), et sont en appui, sur un côté, sur la surface périphérique intérieure (9b) de la fente périphérique (7), et **en ce que** la force de pression et la caractéristique d'élasticité des brosses (5) sont adaptées aux propriétés physiques du fluide de manière telle, qu'en cas de vitesse élevée, les brosses (5) flottent et se maintiennent sans être en contact par rapport à la surface périphérique (9b).

2. Dispositif selon la revendication précédente, **caractérisé en ce que** les brosses (5) sont conformées en étant élastiques à la flexion, de manière telle que les brosses (5) flottent au cours du fonctionnement et se maintiennent en ne venant pratiquement pas au contact des parois (9a, 9b) de la fente périphérique (7).

3. Dispositif selon la revendication 1 ou 2, **caractérisé en ce que** la fente périphérique (7) s'ouvrant sur le joint à brosses (3) s'élargit au moins partiellement vers l'ouverture (8).

4. Dispositif selon l'une quelconque des revendications précédentes, **caractérisé en ce que** les brosses (5) se terminent dans une partie cylindrique (A_{Z}) de la fente périphérique (7).

5. Dispositif selon la revendication 4, **caractérisé en ce que** la partie cylindrique (A_{Z}) est réalisée en étant espacée de l'ouverture (8) et en étant contiguë au fond (10) de la fente périphérique (7).

6. Dispositif selon l'une quelconque des revendications 3 à 5, **caractérisé en ce qu'**une partie ayant une largeur pratiquement constante est adjacente à l'ouverture (8).

7. Dispositif selon l'une quelconque des revendications précédentes, **caractérisé en ce que** la fente périphérique (7) comprend, entre deux parties cylindriques (A_{Z}), une partie (A_{K}) à profil conique.

8. Dispositif selon l'une quelconque des revendications précédentes, **caractérisé en ce que** la fente périphérique (7) est limitée vers l'intérieur et vers l'extérieur, dans le sens radial, par des parois (9a, 9b) concentriques l'une par rapport à l'autre.

9. Dispositif selon la revendication 8, **caractérisé en ce que** la paroi (9a ou 9b) intérieure radiale et / ou extérieure radiale présente un profil conique.

10. Dispositif selon l'une quelconque des revendications précédentes, **caractérisé en ce que** les bords périphériques (11) de la fente périphérique (7), formant l'ouverture (8), sont arrondis en s'évasant vers l'extérieur.

11. Dispositif selon l'une quelconque des revendications précédentes, **caractérisé en ce que** le joint à brosses (3) comprend un carter d'étanchéité (6) fixé sur le stator (2), lequel carter d'étanchéité, pour le guidage des brosses (5), se termine par un bord intérieur radial et / ou extérieur radial (12a, b).

12. Dispositif selon la revendication 11, **caractérisé en ce que** le ou les bords périphériques (12a, b) pénètre(nt) dans la fente périphérique (7) au moins au cours du fonctionnement.

13. Dispositif selon l'une quelconque des revendications précédentes, **caractérisé en ce que** le joint à brosses (3) est relié, de façon démontable, au stator (2).
